# EUROPEAN PATENT SPECIFICATION

(11) **EP 1 530 860 B1**
(45) Date of publication and mention of the grant of the patent: **27.09.2006**
(21) Application number: 03735666.4
(22) Date of filing: 24.06.2003
(51) Int. Cl.: H04L 29/06

(54) **METHOD AND SYSTEM FOR USER-DETERMINED AUTHENTICATION AND SINGLE-SIGN-ON IN A FEDERATED ENVIRONMENT**
VERFAHREN UND SYSTEM FÜR BENUTZERBESTIMMTE AUTHENTIFIZIERUNG UND EINMALIGE ANMELDUNG IN EINER FÖDERALISIERTEN UMGEBUNG
PROCEDE ET SYSTEME D'AUTHENTIFICATION DETERMINEE PAR L'UTILISATEUR ET OUVERTURE DE SESSION UNIQUE DANS UN ENVIRONNEMENT FEDERE

(30) Priority: 28.06.2002 US 184664
(43) Date of publication of application: 18.05.2005
(73) Proprietor: International Business Machines Corporation, Armonk, N.Y. 10504 (US)
(72) Inventor: HINTON, Heather, Maria, Austin, TX 78732 (US)
(74) Representative: Duscher, Reinhard
(86) International application number: PCT/EP2003/006604
(87) International publication number: WO 2004/004273

(56) References cited:
- EP-A- 0 940 960
- EP-A- 1 089 516
- WO-A-02/14974
- WO-A-02/39237
- US-B1- 6 240 512

## Description

### BACKGROUND OF THE INVENTION

### 1. Field of the Invention

The present invention relates to an improved data processing system and, in particular, to a method and apparatus for multicomputer data transferring. Still more particularly, the present invention provides a method and apparatus for computer-to-computer authentication.

### 2. Description of Related Art

Information technology (IT) systems and the Internet have fueled the growth of the current global economy. While IT systems have significant benefits, at the same time, they pose potential security threats from unauthorized third parties. Indeed, the lack of security in modern IT systems has emerged as a threat to the integrity of global computer networks. To deal with this problem, IT systems provide a number of known services: data authentication, data confidentiality, entity authentication, authorization, etc..

Authentication and authorization may be accomplished in many ways, and enterprises may desire to provide authorized users with secure access to protected resources from various locations in a user-friendly manner. Although providing secure authentication mechanisms reduces the risks of unauthorized access to protected resources, the same authentication mechanisms may become barriers to user interaction with the protected resources. Users generally desire the ability to jump from interacting with one application to another application without regard to the authentication barriers that protect each particular system supporting those applications.

As users get more sophisticated, they expect that computer systems coordinate their actions so that burdens on the user are reduced. These types of expectations also apply to authentication processes. A user might assume that once he or she has been authenticated by some computer system, the authentication should be valid throughout the user's working session, or at least for a particular period of time, without regard to the various computer architecture boundaries that are almost invisible to the user. Enterprises generally try to fulfill these expectations in the operational characteristics of their deployed systems, not only to placate users but also to increase user efficiency, whether the user efficiency is related to employee productivity or customer satisfaction.

More specifically, with the current computing environment in which many applications have a Web-based user interface that is accessible through a common browser, users expect more user-friendliness and low or infrequent barriers to movement from one Web-based application to another. In this context, users are coming to expect the ability to jump from interacting with an application on one Internet domain to another application on another domain without regard to the authentication barriers that protect each particular domain. However, even if many systems provide secure authentication through easy-to-use, Web-based interfaces, a user may still be forced to reckon with multiple authentication processes that stymie user access across a set of domains. Subjecting a user to multiple authentication processes in a given time frame may significantly affect the user's efficiency.

The barriers that are presented by multiple authentication processes or systems are becoming increasingly common as more organizations participate in federated computing environments. In a federated environment, a user that is a registered member of one organization can get access to a remote resource that is controlled by another organization. In a federated environment, each organization is responsible for the administration of the organization's own registered users and resources, yet the computer systems of the federated organizations interoperate in some manner to share resources between registered members of the organizations.

For example, each user is registered in a "home domain" that provides certain fundamental services to a user. A user typically logs into the user's home domain through some form of authentication process, after which the user is allowed to access secured resources that are supported by the home domain in accordance with the user's previously defined authorization attributes. In this manner, the user has a permanent relationship with the user's home domain. In addition, the home domain may have a permanent relationship with many other domains in an environment termed a "federation" or a "federated environment", sometimes also called business-to-business (B2B) or e-community domains.

Solutions have been proposed for reducing the barriers that are presented by multiple authentication processes or systems in federated environments, In EP-Application Serial Number 01/12361, filed 11/09/2000, titled "Method and system for Web-based cross-domain single-sign-on authentication", an approach termed "cross-domain single-sign-on" was described in which a user would be allowed to transfer from a home domain to a participating security domain without having to re-authenticate to the second domain. A drawback in the described approach is that a user can only transfer to a participating domain directly from the user's home domain. In US-Application Serial Number 10/034725, filed 12/19/2001, titled "System and method for user enrollment in an e-community", an approach was described in which a user would be allowed to establish a permanent relationship with a participating domain through the use of a "domain identity cookie". This approach gives the user the ability to go directly to this domain, e.g., via bookmarks or direct URLs (Uniform Resource Locators) without first having to go through the user's home domain. This flexible approach allows for a simple user experience in which the user does not need to know implementation details about the e-community in which the user is participating. This approach is easy to implement, easy to use, and provides a secure method of cross-domain single-sign-on functionality.

The difficulty with both of these approaches is that each requires that a user have one and only one domain capable of authenticating the user, and any domain visited by the user must have *a priori* knowledge and trust of the user's home domain.

International Patent application with Serial Number WO 02/14974 A2, titled "Multi-Server Authentication", provides a method of transactional authentication, comprising receiving transactional information comprising: a card ID, a code and a counter at a first location, selectively transmitting said information to at least one of a plurality of authentication servers, applying a hash function to said information, and matching said hashed information to a database of hashes of valid information at one of said plurality of authentication servers.
It allows authentication of client transactions at a single receiver from a multitude of authentication servers. The authentication server used for authentication may be selected by different embodiments, one being the selection based on the contents of a WWW page at the client. But the authentication is done for each transaction based on a card sending information to the Browser of the client.

Therefore, it would be advantageous to have a method and system in which user authentication throughout a distributed system could be provided without an authentication barrier for each security domain. In other words, it would be advantageous to have cross-domain, single-sign-on authentication in which a user can be authenticated into one security domain and then transfer to another security domain without having to re-authenticate to the second domain. It would be particularly advantageous to use open standards in an approach that is based entirely on legitimate uses of those open standards.

### SUMMARY OF THE INVENTION

A method, apparatus, system, or computer program product is presented for cross-domain, single-sign-on, authentication functionality. An e-commerce service provider receives a request from a client for access to a controlled resource, and the e-commerce service provider allows a specification of one of a plurality of authentication service providers to be used by the e-commerce service provider in determining access to the controlled resource for the client. The e-commerce service provider may receive a specification of an authentication service provider along with the request for access to the controlled resource, which may be in the form of a cookie. Alternatively, the e-commerce service provider may provide for user selection of one of the plurality of authentication service providers if an authentication service provider was not received along with the request for access to the controlled resource. The e-commerce service provider also may provide for user selection of an option to persistently associate with the user the user selection of one of the plurality of authentication service providers. The e-commerce service provider sends an authentication request from the e-commerce service provider to the specified authentication service provider and then determines whether to provide access to the controlled resource based on an authentication response from the specified authentication service provider.

### BRIEF DESCRIPTION OF THE DRAWINGS

The novel features believed characteristic of the invention are set forth in the appended claims. The invention itself, further objectives, and advantages thereof, will be best understood by reference to the following detailed description when read in conjunction with the accompanying drawings, wherein:
**Figure 1A** depicts a typical network of data processing systems, each of which may implement the present invention;
**Figure 1B** depicts a typical computer architecture that may be used within a data processing system in which the present invention may be implemented;
**Figure 1C** illustrates a Web-based environment in which the present invention may be implemented;
**Figure ID** is a data flow diagram illustrating a prior art process that may be used when a client attempts to access a protected resource;
**Figure 2** is a block diagram that depicts a federated environment in which the present invention may be implemented;
**Figure 3** is a flowchart that depicts a process by which an e-commerce service provider attempts to retrieve an authenticated identity from a user-determined authentication service provider for a user who is attempting to access a controlled resource at the e-commerce service provider;
**Figure 4** is a flowchart that depicts a process by which an authentication service provider determines whether or not it should vouch for a user at the request of an e-commerce service provider;
**Figure 5** is a flowchart that depicts a process by which an e-commerce service provider allows a user to select an authentication service provider and/or related options; and
**Figure 6** is a graphical user interface window that shows the selectable options that are available to a user to select an authentication service provider in association with a single-sign-on operation within a federated environment.

### DETAILED DESCRIPTION OF THE INVENTION

In general, the devices that may comprise or relate to the present invention include a wide variety of data processing technology. Therefore, as background, a typical organization of hardware and software components within a distributed data processing system is described prior to describing the present invention in more detail.

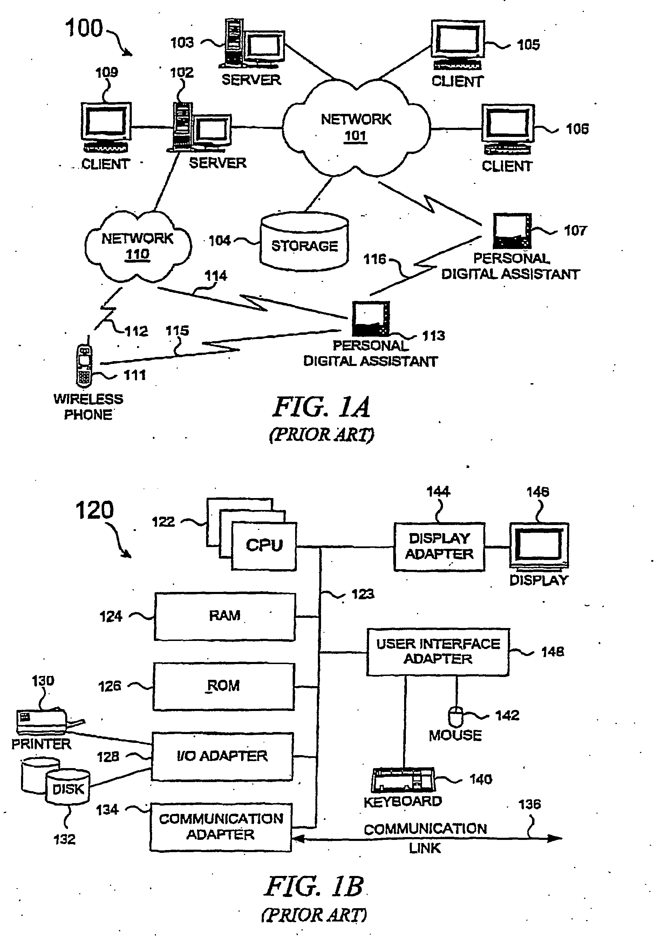

With reference now to the figures, **Figure 1A** depicts a typical network of data processing systems, each of which may implement the present invention. Distributed data processing system 100 contains network 101, which is a medium that may be used to provide communications links between various devices and computers connected together within distributed data processing system **100.** Network **101** may include permanent connections, such as wire or fiber optic cables, or temporary connections made through telephone or wireless communications. In the depicted example, server **102** and server **103** are connected to network **101** along with storage unit **104.** In addition, clients **105-107** also are connected to network **101.** Clients **105-107** and servers **102-103** may be represented by a variety of computing devices, such as mainframes, personal computers, personal digital assistants (PDAs), etc. Distributed data processing system **100** may include additional servers, clients, routers, other devices, and peer-to-peer architectures that are not shown.

In the depicted example, distributed data processing system **100** may include the Internet with network **101** representing a worldwide collection of networks and gateways that use various protocols to communicate with one another, such as LDAP, TCP/IP, HTTP, etc. Of course, distributed data processing system **100** may also include a number of different types of networks, such as, for example, an intranet, a local area network (LAN), or a wide area network (WAN). For example, server **102** directly supports client **109** and network **110,** which incorporates wireless communication links. Network-enabled phone **111** connects to network **110** through wireless link **112,** and PDA **113** connects to network **110** through wireless link **114.** Phone **111** and PDA **113** can also directly transfer data between themselves across wireless link **115** using an appropriate technology, such as Bluetooth^{™} wireless technology, to create so-called personal area networks or personal ad-hoc networks. In a similar manner, PDA **113** can transfer data to PDA **107** via wireless communication link **116.**

The present invention could be implemented on a variety of hardware platforms and software environments. **Figure 1A** is intended as an example of a heterogeneous computing environment and not as an architectural limitation for the present invention.

With reference now to **Figure 1B,** a diagram depicts a typical computer architecture of a data processing system, such as those shown in **Figure 1A,** in which the present invention may be implemented. Data processing system **120** contains one or more central processing units (CPUs) **122** connected to internal system bus **123,** which interconnects random access memory (RAM) **124,** read-only memory **126,** and input/output adapter **128,** which supports various I/O devices, such as printer **130,** disk units **132**, or other devices not shown, such as a audio output system, etc. System bus **123** also connects communication adapter **134** that provides access to communication link **136.** User interface adapter **148** connects various user devices, such as keyboard **140** and mouse **142,** or other devices not shown, such as a touch screen, stylus, microphone, etc. Display adapter **144** connects system bus **123** to display device **146.**

Those of ordinary skill in the art will appreciate that the hardware in **Figure 1B** may vary depending on the system implementation. For example, the system may have one or more processors, such as an Intel® Pentium® -based processor and a digital signal processor (DSP), and one or more types of volatile and non-volatile memory. Other peripheral devices may be used in addition to or in place of the hardware depicted in **Figure 1B.** The depicted examples are not meant to imply architectural limitations with respect to the present invention.

In addition to being able to be implemented on a variety of hardware platforms, the present invention may be implemented in a variety of software environments. A typical operating system may be used to control program execution within each data processing system. For example, one device may run a Unix® operating system, while another device contains a simple Java® runtime environment. A representative computer platform may include a browser, which is a well known software application for accessing hypertext documents in a variety of formats, such as graphic files, word processing files, Extensible Markup Language (XML), Hypertext Markup Language (HTML), Handheld Device Markup Language (HDML), Wireless Markup Language (WML), and various other formats and types of files. It should also be noted that the distributed data processing system shown in **Figure 1A** is contemplated as being fully able to support a variety of peer-to-peer subnets and peer-to-peer services.

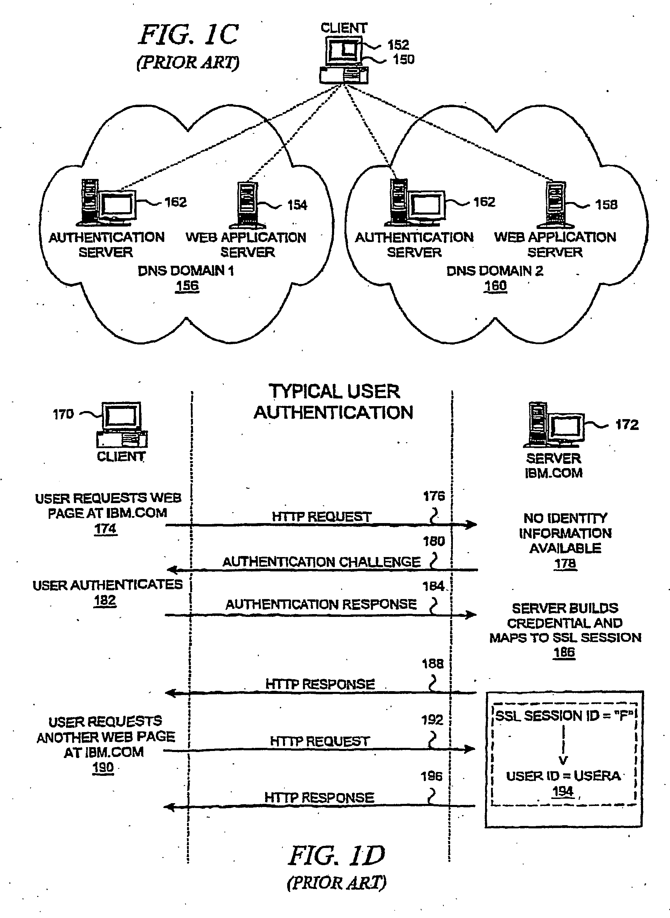

With reference now to **Figure 1C,** a network diagram illustrates a more specific, yet generic, Web-based environment in which the present invention may be implemented. In this environment, a user of a browser **152** at client **150** desires to access a protected resource on web application server **154** in DNS domain **156,** or on web application server **158** in DNS domain **160.** A protected resource is a resource (an application, an object, a document, a page, a file, executable code, or other computational resource, communication-type resource, etc.) that is only accessed or retrieved if the requesting client browser is both authenticated and authorized. Each DNS domain may have an associated authentication server **162.** Typically, once the user is authenticated by the authentication server, a cookie may be set and stored in a cookie cache in the browser. The requesting client may make an intra-domain request or an inter-domain request for the protected resource. An intra-domain request means that the target resource is located on the same server that performs the authentication. An inter-domain request means that the target resource is located within the same Internet domain but is on a different server than the authentication server which established the authentication. A cross-domain request means that the user wishes to access a protected resource that is outside the DNS domain that the user is currently using.

With reference now to **Figure 1D,** a data flow diagram illustrates a prior art process that may be used when a client attempts to access a protected resource. As illustrated, the user at a client workstation **170** seeks access over a computer network to a protected resource on a server **172** through the user's Web browser executing on the client workstation. As noted above, a protected resource is identified by a Uniform Resource Locator (URL), or more generally, a Uniform Resource Identifier (URI), that can only be accessed by an authenticated and authorized user. The computer network may be the Internet, an intranet, or other network, as shown in **Figure 1A** or **Figure 1B,** and server may be a Web Application Server (WAS), a server application, a servlet process, or the like.

The process is initiated when the user requests the protected resource, such as a Web page within the domain "ibm.com" (step **174).** The Web browser (or associated application or applet) generates an HTTP Request that is sent to the Web server that is hosting the domain "ibm.com" (step **176).** The server determines that it does not have an active session for the client (step **178),** so the server requires the user to perform an authentication process by sending the client some type of authentication challenge (step **180).** The authentication challenge may be in various forms, such as a Hypertext Markup Language (HTML) form, into which the user must enter required information (step **182),** such as a user identifier and an associated password.

The authentication response information in the HTML form is posted to the server (step **184),** at which point the server authenticates the user by retrieving previously submitted registration information and matching the presented authentication information with the user's stored information. Assuming the authentication is successful, a Secure Sockets Layer (SSL) session with a unique session identifier (session ID) is assigned to the authenticated user (step **186).**

Although **Figure 1D** depicts a typical prior art process, it should be noted that other alternative session state management techniques may be depicted at this point, such as using cookies to identify users with active sessions, which may include using the same cookie that is used to provide authentication proof.

The server then retrieves the requested Web page and sends an HTTP Response to the client (step **188).** At that point, the user may request another page within "ibm.com" (step **190)** within the browser by clicking a hypertext link, and the browser sends another HTTP Request to the server (step **192) .** At that point, the server recognizes that the user has an active session (step **194),** and the server sends the requested Web page back to the client in another HTTP Response. (step **196).**

As noted above, the present invention may be used within a variety of networks and hardware platforms. More particularly, though, the present invention provides a methodology so that a user is not challenged for authentication purposes when attempting to access protected resources within multiple, affiliated domains. This allows some degree of free movement between domains that participate in a cross-domain, single-sign-on federation or arrangement. For example, a large extranet may have multiple domains, each with its own set of users and protected resources. However, the protected resources may have a common enterprise-wide association, and there may be considerable overlap among the sets of users. A user can gain some efficiency or productivity in not having to pass multiple authentication challenges when entering the separate domains. Hence, the present invention attempts to remove barriers to free movement across Web sites.

More specifically, as mentioned above, the difficulty with some previous approaches to distributed authentication is that the approaches required that a user have one and only one domain capable of authenticating the user, and any domain visited by the user must have *a priori* knowledge and trust of the user's home domain. In contrast, the present invention allows a user to contract with one or more authentication service providers (ANSPs). The user maintains a relationship with these ANSPs and authenticates to an ANSP. E-commerce service providers (ECSPs), such as online banks or online merchants, also maintain a relationship with an ANSP such that the e-commerce service provider can trust the authenticated identity of a user that is provided by the authentication service provider on behalf of the user. The user can visit any e-commerce service provider without having to establish an a priori relationship with that particular e-commerce service provider. As long as the e-commerce service provider's domain has a relationship with at least one of the user's authentication service providers, then the user will be able to have a "single-sign-on" experience at that e-commerce service provider.

The present invention extends the enrollment process described in U.S. Patent Application Serial Number (Attorney Docket Number AUS920010769US1), filed (TBD), titled "System and method for user enrollment in an e-community", by allowing a user to customize their enrollment at a site. In other words, the user can choose to "enroll" at a site by indicating to the site the location of a trusted third-party that is able to vouch for the authenticated identity of the user. This process may result in the setting of a domain identity cookie (DIDC), which was described in U.S. Patent Application Serial Number (Attorney Docket Number AUS920010769US1) . Alternatively, a user may choose not to have a domain identity cookie set such that the user must indicate the location of the trusted third-party upon each initial access to a given site, or more specifically, each access when the user does not have a currently active session with the given site. These and other features of the present invention are described in more detail below with respect to the remaining figures.

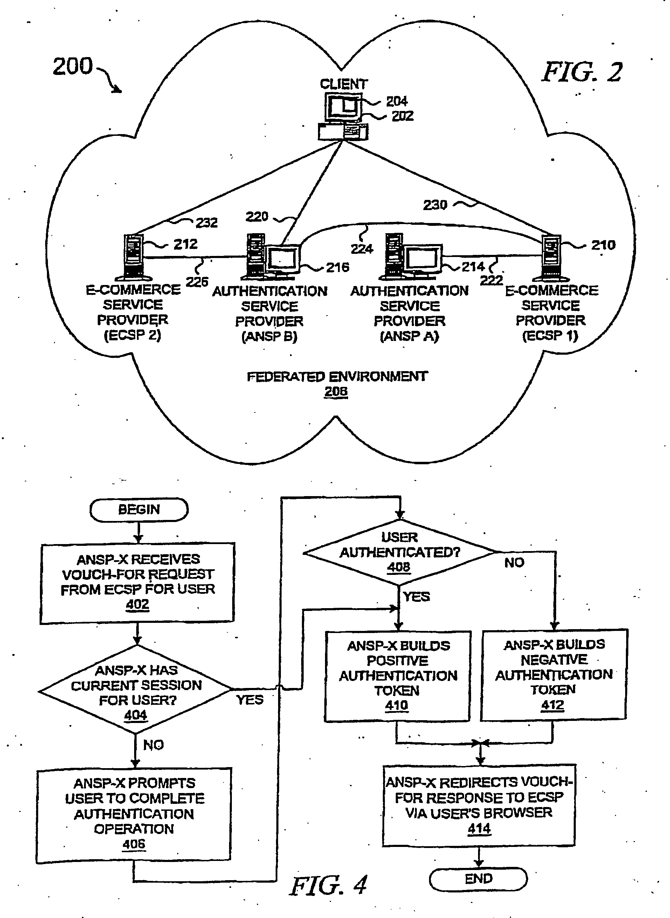

With reference now to **Figure 2,** a block diagram depicts a federated environment in which the present invention may be implemented. Federated environments, such as the one that is shown in **Figure 2,** comprise users, e-commerce service providers (ECSPs), and authentication service providers (ANSPs). ECSPs correspond to business entities that are participating in a federation. ANSPs correspond to entities to which a user authenticates and which provide proof of authentication to ECSPs. Within a given e-community, the roles of e-commerce service provider and authentication service provider can be provided by distinct entities or a single entity.

Federated environment **200** comprises: a user, who is represented by client **202** having browser application **204;** two e-commerce service providers, ECSP **210** and ECSP **212;** and two authentication service providers, ANSP **214** and ANSP **216.** The user has authentication relationship **220** with ANSP **216.** ECSP **210** has trusted relationship **222** with ANSP **214** and trusted relationship **224** with ANSP **216.** ECSP 212 has trusted relationship **226** with ANSP **216.** The user attempts to access ECSP **210** and ECSP **212** along network paths **230** and **232,** respectively.

Hence, as shown in this example and explained in more detail further below, the present invention relies upon the fact that the user has previously established an authentication relationship with at least one authentication service provider and possibly a plurality of authentication service providers, which would be primarily an "out-of-band" process by which the user enrolls or subscribes with an authentication service provider for authentication/proof-of-identity services. A user may contract for different strengths of authentication, such as username/password, smart card, biometric, or digital certificate; in other words, the present invention is able to interoperate with a variety of underlying authentication schemes.

The present invention also relies upon the fact that an e-commerce service provider has previously established a trust relationship with at least one authentication service provider and possibly a plurality of authentication service providers, which would be primarily an "out-of-band" process by which the e-commerce service provider and an authentication service provider engage in various types of agreements with respect to liability of each party concerning authentication/proof-of-identity services. An e-commerce service provider may contract for different strengths of authentication, and the present invention is able to interoperate with a variety of underlying authentication schemes.

As part of the process of establishing a trust relationship, the e-commerce service provider and the authentication service provider would engage in an out-of-band exchange of information that is used to establish a trust relationship, which may include a shared secret key, digital certificates, or some other form of information. This information is used to protect user proof-of-identity information that is presented by the e-commerce service provider to the authentication service provider during a user transaction. Public-key techniques may be used to exchange this information, but because of the limitations of public-keys and associated certificates and the security requirements on a proof-of-identity as presented to an e-commerce service provider, secret keys are preferable, although the present invention is operable with a public-key-based technique.

A preferred embodiment uses a secret-key-based technique rather than a public-key-based technique for the following reasons. Proof-of-identity and/or authenticated identity information is passed over the Internet from the authentication service provider to the e-commerce service provider via the user's client application, typically a browser, using HTTP redirects. In this situation, the information must be protected, which is accomplished by encrypting the token containing the user's authenticated identity information and additional information (such as authentication method, personal information, etc.). A secret-key technique is preferable because it is more efficient than using a public-key technique. For example, if this information is encrypted with the e-commerce service provider's public key, there would be no proof that the information came from the authentication service provider. If the information is encrypted with the authentication service provider's private key, there is nothing to prevent anyone who obtains a copy of the token from decrypting it, which would reveal potentially confidential information. This implies that the token must be doubly encrypted, once with the authentication service provider's private key and then with the e-commerce service provider's public key. Thus, two encryptions are required to protect the token and two decryptions are required to retrieve it. Using a secret key technique, only one encryption and one decryption is required.

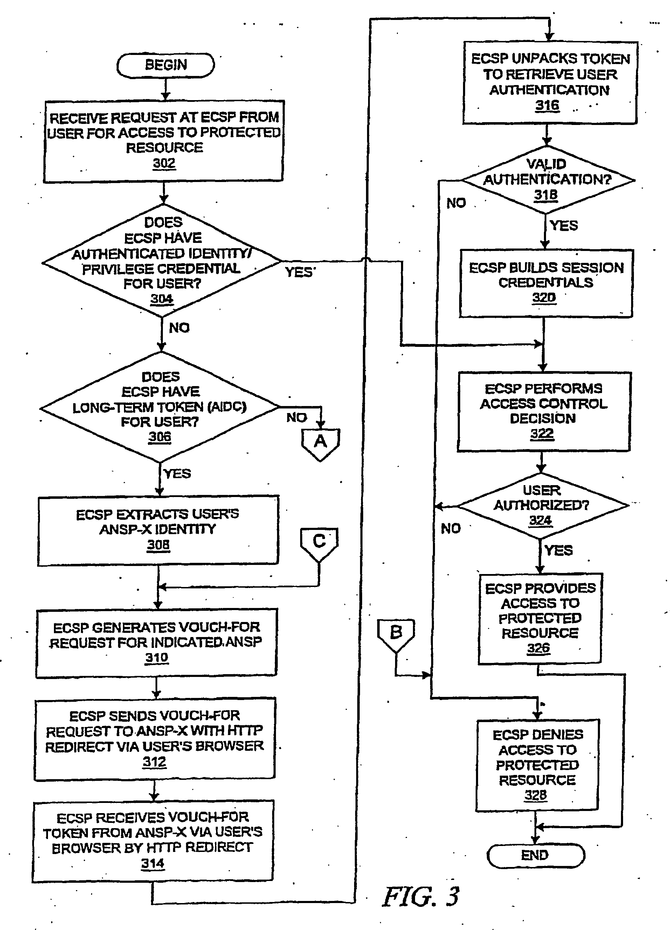

With reference now to **Figure 3,** a flowchart depicts a process by which an e-commerce service provider attempts to retrieve an authenticated identity from a user-determined authentication service provider for a user who is attempting to access a controlled/protected resource at the e-commerce service provider. **Figure 3** shows a process that is initiated when a user requests access to a resource, and an e-commerce service provider has decided that an access control decision is required. In order for the access control decision to be performed, the e-commerce service provider requires an authenticated identity for the user. As part of a single-sign-on operation within a federated environment, the e-commerce service provider does not prompt the user for a proof-of-identity, e.g., login via username/password. Instead, the e-commerce service provider will attempt to retrieve an authenticated identity (or proof-of-identity, such as a vouch-for token) from an authentication service provider. In accordance with the present invention, a user has an ability to direct the authentication operation to one of potentially many authentication service providers. It should be noted, however, that an e-commerce service provider may authenticate a user itself, particularly when the e-commerce service provider is the home domain of the user, although an e-commerce provider would usually use an authentication service provider to authenticate a user when the e-commerce service provider is not the user's home domain.

The process in **Figure 3** begins with an e-commerce service provider receiving a request from a user for access to a protected resource (step **302).** A determination is then made as to whether or not the e-commerce service provider already has an authenticated identity or privilege credential for the user (step **304).** If not, then the e-commerce service provider determines whether or not it has a long-term token for the user (step **306).** The long-term token may be an ANSP Identity Cookie (AIDC), which is similar to a domain identity cookie, mentioned above, but which identifies the user's preferred authentication service provider. The e-commerce service provider could possess an AIDC for the user because one could have been previously set at the user's browser, and because the user's browser would ensure that the AIDC accompanies all requests to the e-commerce service provider's domain, the e-commerce service provider would have received the cookie when it accompanied the request for the controlled resource. The e-commerce service provider extracts the identity of the user's preferred authentication service provider from the long-term token (step **308)** and generates a vouch-for request for the indicated or preferred authentication service provider (step **310**) . The e-commerce service provider sends the vouch-for request to the authentication service provider using HTTP redirection via the user's browser (step **312).**

Given the scenario described with respect to steps **302-312,** one can understand the effectiveness of the present invention. Although the e-commerce service provider does not already have an authenticated identity/privilege credential for the user, i.e. the user is initiating a new session with the e-commerce service provider, the e-commerce service provider can attempt to obtain a vouch-for token for the user from the user's preferred authentication service provider, even though the user has not been asked to provide any such authentication information directly to the e-commerce service provider during this particular session.

Continuing with the example, at some point in time, the e-commerce service provider receives the vouch-for response from the authentication service provider using HTTP redirection via the user's browser (step **314).** The e-commerce service provider unpacks the token to retrieve the user authentication response (step **316)** and examines it to determine whether a valid authentication was completed (step **318).** If so, then the e-commerce service provider builds the session credentials for the user (step **320)** and initiates the access control decision operation (step **322).** A determination is made as to whether or not the user is authorized (step **324),** and if the result of the access control decision is positive, i.e. the user is authorized, then the e-commerce service provider provides access to the protected resource (step **326),** and the process is complete.

Referring again to step **304,** if the e-commerce service provider already has an authenticated identity or privilege credential for the user, then the process branches to step **322** in which the e-commerce service provider immediately performs an access control decision. This scenario may occur when the user has already accessed the same or a similar controlled resource at the e-commerce service provider.

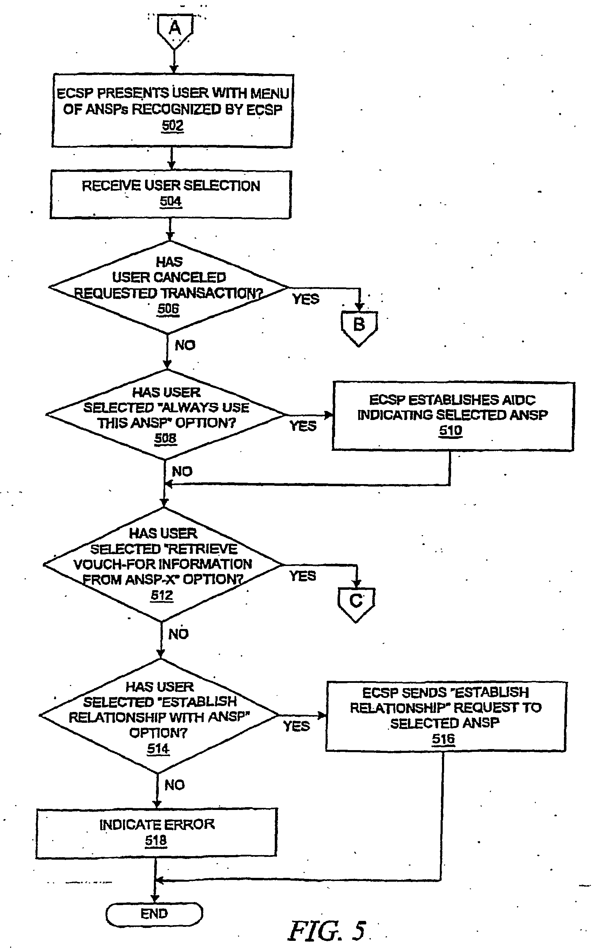

Referring again to step **306,** if the e-commerce service provider does not have a long-term token for the user, then the process branches to complete a subprocess as shown in **Figure 5,** which is described further below.

With reference now to **Figure 4,** a flowchart depicts a process by which an authentication service provider determines whether or not it should vouch for a user at the request of an e-commerce service provider. The flowchart in **Figure 4** shows the processing that occurs at the authentication service provider when the e-commerce service provider sends a vouch-for request to the authentication service provider, as mentioned above in step **312.**

The process in **Figure 4** begins when a particular authentication service provider receives a vouch-for request from an e-commerce service provider for a given user (step **402).** A determination is made as to whether or not the authentication service provider has an active session for the user (step **404).** If the authentication service provider does not already have an active or current session for the user, then the authentication service provider prompts the user to complete some form of authentication operation (step **406).**

A determination is then made as to whether or not the user has been authenticated (step **408).** If the user has been authenticated, then the authentication service provider builds an authentication token that indicates that the user has been positively authenticated (step **410).** If the user has not been authenticated, then the authentication service provider builds an authentication token that indicates that the user has failed the authentication operation (step **412).** In either case, the authentication service provider then sends a vouch-for response message comprising the authentication token to the requesting e-commerce service provider via HTTP redirection through the user's browser (step **414),** and the process is complete. It should be noted that, in both cases, the authentication service provider may insert dummy information or otherwise mask the contents of the vouch-for message in order to prevent a snooper from being able to differentiate successful and unsuccessful vouch-for tokens, which would provide information about the user's authentication attempts.

Referring again to step **404,** if the authentication service provider has an active session for the user, then the process branches to step **410** because the authentication service provider can immediately build an authentication token that indicates that the user has been positively authenticated. This scenario would occur when a user has already required an authenticated identity credential at another e-commerce service provider, which would have required the user to perform an authentication operation. The authentication service provider maintains a session for the user, most likely with some restrictions, such as a maximum period for which the user's authentication session at the authentication service provider is valid.

With reference now to **Figure 5,** a flowchart depicts a process by which an e-commerce service provider allows a user to select an authentication service provider and/or related options. The process shown in **Figure 3** reaches the subprocess shown in **Figure 5** through step **306.** In this scenario, if the e-commerce service provider does not have a long-term token for the user, then the process branches to complete the subprocess that is shown in **Figure 5.**

The process shown in **Figure 5** begins with the e-commerce service provider presenting the user with a menu of ANSPs that are recognized by the e-commerce service provider (step 502). In accordance with the present invention, the e-commerce service provider allows a user to choose a preferred authentication service provider, although the authentication service provider must be one with which the e-commerce service provider already has a trust relationship. If not, then the user is provided with an opportunity to establish a relationship with an authentication service provider that the e-commerce service provider recognizes, i.e. with which the e-commerce service provider has a trust relationship, as described below.

After presenting the menu, which may be in the form of a dialog box or some other user input mechanism, the e-commerce service provider receives the user selection (step **504).** A determination is made as to whether the user has requested to cancel the pending transaction at this point (step **506),** and if so, then the process branches back to step **328** in **Figure 3,** at which point the user would be denied access to the controlled resource. If the user has not requested to cancel the pending transaction at this point, then a determination is made as to whether the user has selected a particular option that informs the e-commerce service provider that the user wants always to use a particular authentication service provider (step **508).** If so, then the e-commerce service provider establishes an AIDC that indicates the user's selected authentication service provider (step **510),** which would be indicated elsewhere within the user input that is received from the user dialog box. In this possible embodiment, an AIDC may be established by setting a cookie at the user's browser.

In either case, a determination is then made as to whether the user has selected an option to retrieve vouch-for information from an authentication service provider (step **512),** for which the identity of the particular authentication service provider would be indicated elsewhere within the user input that is received from the user dialog box. In other words, the user has selected a preferred authentication service provider that the e-commerce service provider should use to authenticate the user, and the process branches back to step 310 in which the e-commerce service provider generates a vouch-for request to the chosen authentication service provider.

If the user has not chosen the option to retrieve vouch-for information from an authentication service provider, then a determination is made as to whether the user has selected an option to establish a relationship with an authentication service provider (step **514).** If so, then the e-commerce service provider sends an establish-relationship request of some form to the selected authentication service provider (step **516),** e.g., by redirecting the user's browser to a particular page supported by the user's selected authentication service provider.

If none of the above options have occurred, then a processing error is indicated by the e-commerce service provider in some manner (step **518),** and the process is complete.

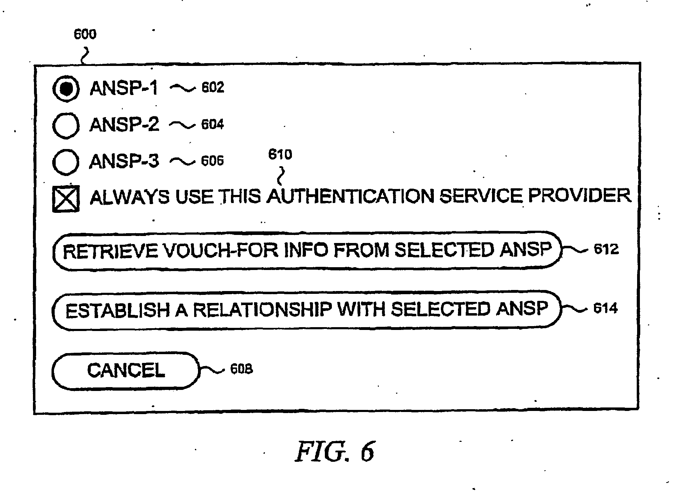

With reference now to **Figure 6,** a graphical user interface window shows the selectable options that are available to a user from depicts a process by which an e-commerce service provider allows an e-commerce service provider that allows a user to select an authentication service provider in association with a single-sign-on operation within a federated environment. Dialog box **600** shows three radio-button controls **602-606** that are labeled with the identifiers of three authentication service providers. Dialog box **600** may be presented to a user when an e-commerce service provider provides a user with an opportunity to select a preferred authentication service provider. In most Web environments, the controls that are shown in dialog box **600** would likely be presented in the form of an HTML-formatted document, i.e. Web page.

Cancel button **608** provides a user with an opportunity to cancel the pending request to access a controlled resource prior to being prompted for authorization information. Check-box **610** provides a user with the ability to request that the chosen authentication service provider should always be used by the e-commerce service provider when the e-commerce service provider needs to contact an authentication service provider for authentication purposes. Button 612 closes the dialog box and informs the e-commerce service provider that the user has requested that the authentication service provider that is indicated by the radio buttons should be used for vouch-for requests by the e-commerce service provider. Button **614** closes the dialog box and informs the e-commerce service provider that the user would like to establish a relationship with the authentication service provider that is indicated by the radio buttons.

The process of vouching for a user's identity is sometimes referred to as "transfer of authentication assertions" across a federated environment or an e-community. The user's home domain vouches for the identity of the user to another domain. This means that each member organization in the federated environment is responsible for managing the users in the home domain and for providing a rule set for mapping the vouched-for identities from other domains.

Referring again to **Figure 2,** the present invention can be described in more detail with respect to the federated environment that is shown in **Figure 2.** The vouch-for process occurs when a user requests a resource from a domain with which the user does not have an active, authenticated session, such as the domains supported by ECSP **210** or ECSP **212.**

Assume that the user at client **202** attempts to access a resource from ECSP **210** and that the user has never accessed resources at ECSP **210.** Hence, there would be no AIDC set by ECSP **210** at client **202,** and ECSP **210** will prompt the user for the identity of a preferred authentication service provider. As discussed above and shown in **Figure 6,** the user could be provided options like "authenticate with ANSP-X" or "enroll with ANSP-X". In addition, associated with the entire request would be the option to always use a selected authentication service provider. Once the user has chosen these options, ECSP **210** will build an appropriate token to be sent to the user-selected authentication service provider.

Assume that the user has chosen an option to authenticate with ANSP **214.** ECSP **210** will build a vouch-for request for ANSP **214** and send this request to ANSP **214** by redirection through the browser of client **202.** The vouch-for request will be received by ANSP **214,** and if ANSP **214** has a currently valid session with the user, then ANSP **214** will build a vouch-for response and redirect it back to ECSP **210** using HTTP redirection via the user's browser. If ANSP **214** does not have a currently active session with the user, then ANSP **214** will prompt the user for authentication information. Based on the success of the authentication, ANSP **214** will build a vouch-for response for ECSP **210,** and the vouch-for response may indicate either a successful authentication or a failed authentication. This vouch-for response will be returned to ECSP **210** using HTTP redirection via the user's browser.

ECSP **210,** upon receiving the vouch-for token with a successful authentication indication from ANSP **214,** will activate a session for client **202** and will do an access control decision on the user's request. If the user has selected the "always use this ANSP" option, then ECSP **210** will build an ANSP Identity Cookie (AIDC) for the user. This cookie will identify the user's preferred authentication service provider. Further accesses to resources at ECSP **210,** in the absence of a currently active session, will automatically generate a request for a vouch-for token from ANSP **214** via HTTP redirection through the user's browser.

In this manner, information is passed from a home domain to other domains in the federated environment, i.e. e-community, through a vouch-for token. The vouch-for token is used to vouch for the authenticity of the user's identity to the other organizations in the federated environment. The vouch-for token will be created for each e-community domain only when requested and cannot be used by any e-community domain other than the intended domain. The vouch-for token is preferably transitory in that it exists for the re-direction only and will not reside in the user's persistent or non-persistent cookie storage. In addition, the vouch-for token is preferably protected by encryption. The vouch-for token is included in the response that is redirected back to the "requesting" e-community domain. When the requesting front-end/domain receives the response, it will parse the vouch-for token, map the user's identity to a local identity, create credentials for the user, do the access control decision, and provide the appropriate response to the user's request. This front-end is then able to vouch for the user's identity within the domain.

The advantages of the present invention should be apparent in view of the detailed description of the invention that is provided above. The present invention allows a user to contract with one or more authentication service providers (ANSPs). The user maintains a relationship with these ANSPs and authenticates to an authentication service provider. E-commerce service providers (ECSPs), such as online banks or online merchants, also maintain a relationship with an ANSP such that the e-commerce service provider can trust the authenticated identity of a user that is provided by the ANSP on behalf of the user. The user can visit any e-commerce service provider without having to establish an a priori relationship with that particular e-commerce service provider. As long as the e-commerce service provider's domain has a relationship with at least one of the user's authentication service providers, then the user will be able to have a "single-sign-on" experience at that e-commerce service provider. With the present invention, the user is not challenged for authentication purposes when attempting to access a protected resource at a second domain within a federated environment under certain conditions. This allows some degree of free movement between domains that participate in a cross-domain, single-sign-on federation or arrangement. The user gains some efficiency or productivity in not having to pass multiple authentication challenges, which can be barriers to free movement across Web sites.

It is important to note that while the present invention has been described in the context of a fully functioning data processing system, those of ordinary skill in the art will appreciate that the processes of the present invention are capable of being distributed in the form of instructions in a computer readable medium and a variety of other forms, regardless of the particular type of signal bearing media actually used to carry out the distribution. Examples of computer readable media include media such as EPROM, ROM, tape, paper, floppy disc, hard disk drive, RAM, and CD-ROMs and transmission-type media, such as digital and analog communications links.

The description of the present invention has been presented for purposes of illustration but is not intended to be exhaustive or limited to the disclosed embodiments. Many modifications and variations will be apparent to those of ordinary skill in the art. The embodiments were chosen to explain the principles of the invention and its practical applications and to enable others of ordinary skill in the art to understand the invention in order to implement various embodiments with various modifications as might be suited to other contemplated uses.

## Claims

1. A method for user-determined authentication within a federated environment (200) comprising a user, who is represented by a client (202), a multitude of e-commerce service providers (210,212) and a multitude of authentication service providers (214,216), conprising the steps of:
receiving at a first server a request (302) from a client for access to a resource controlled by the first server;
determining (304) if the first server has a valid authentication credential for the client at the first server;
A:
if the first server has a valid authentication credential: performing an access control decision (322) for the request from the client for access (326) to the controlled resource based on the authentication credential for the client at the first server;
if the first server has no valid authentication credential: determining (306) whether the first server has an identity of a second server for supporting an authentication service that was previously associated with the client at the first server;
B:
if the first server has an identity of a second server: sending an authentication request (312) to the second server from the first server; receiving (314,316) the authentication credential for the client from the second server; and continue with step A;
if the first server has no identity of a second server: presenting a menu of authentication service providers (502) to the client; receiving from the client a selection (504) of an identity for the second server; and continue with step B.

2. The method of claim 1 further comprising:
determining at the second server (404) whether the second server has a valid authentication credential for the client; and
in response to a determination that the second server has a valid authentication credential for the client, returning a valid authentication, status (410) in response to a authentication request of the first server.

3. The method of claim 1 or claim 2 further comprising:
associating (510) with the client the user's choice of the identity of the second server at the first server.

4. The method of claim 3 further comprising:
storing (510) the user's choice of the identity of the second server in a persistent cookie at the client.

5. The method of claim 3 further comprising:
allowing a user to choose (508, 610) whether to store the user's choice of the identity of the second server in a cookie at the client.

6. The method of claim 3 further comprising:
allowing a user to choose (508, 610) whether to persistently associate the user's choice of the identity of the second server with the user.

7. The method of claim 1 further comprising:
using HTTP redirection via the client (312) to send the authentication request to the second server at the first server.

8. The method of claim 1 utilizing a network data message (302) comprising:
a transport protocol header;
a Uniform Resource Identifier (URI) associated with a controlled resource; and
an authentication service provider token that indicates a domain identity of an authentication service provider, wherein the authentication service provider is one of a plurality of authentication service providers in a federated environment that may be used in responding to a request to access the controlled resource.

9. A computer system comprising means adapted for carrying out the steps of the method according to anyone of the preceding claims 1 to 8.

10. A computer program product stored on a computer usable medium, comprising computer readable program means for causing a computer to perform a method according to anyone of the preceding claims 1 to 8 when said program is run on said computer.

## Patentansprüche

1. Verfahren zur benutzerdefinierten Authentifizierung innerhalb einer föderierten Umgebung (200), die einen durch einen Client (202) dargestellten Benutzer, eine Vielzahl von E-Commerce-Serviceanbietern (210, 212) und eine Vielzahl von Authentifizierungs-Serviceanbietern (214, 216) umfasst, wobei das Verfahren die folgenden Schritte umfasst:
Empfangen einer Anforderung (302) eines Clients an einem ersten Server für das zugreifen auf eine durch den ersten Server kontrollierte Ressource;
Ermitteln (304), ob der erste Server über einen gültigen Authentifizierungsnachweis für den Client am ersten Server verfügt;
A:
wenn der erste Server über einen gültigen Authentifizierungsnachweis verfügt: Herbeiführen einer Entscheidung über die Zugriffskontrolle (322) für die Anforderung eines Clients für den Zugriff (326) auf die kontrollierte Ressource ausgehend von dem Authentifizierungsnachweis für den Client am ersten Server;
wenn der erste Server über keinen gültigen Authentifizierungsnachweis verfügt: Ermitteln (306), ob der erste Server über eine Identität eines zweiten Servers verfügt, um einen Authentifizierungsservice zu unterstützen, der vorher mit dem Client am ersten Server verbunden war;
B:
wenn der erste Server über eine Identität eines zweiten Servers verfügt: Senden einer Authentifizierungsanforderung (312) vom ersten Server an den zweiten Server; Empfangen (314, 316) des Authentifizierungsnachweises für den Client vom zweiten Server; und Fortfahren mit Schritt A;
wenn der erste Server über keine Identität eines zweiten Servers verfügt: Vorlegen eines Menüs von Authentifizierungs-Serviceanbietern (502) für den Client; Empfangen einer Auswahl (504) einer Identität für den zweiten Server vom Client; und Fortfahren mit Schritt B.

2. Verfahren nach Anspruch 1, das ferner Folgendes umfasst:
Ermitteln auf dem zweiten Server (404), ob der zweite Server über einen gültigen Authentifizierungsnachweis für den Client verfügt; und
als Reaktion auf eine Ermittlung, dass der zweite Server über einen gültigen Authentifizierungsnachweis für den Client verfügt, Zurückgeben eines gültigen Authentifizierungsstatus (410) als Reaktion auf eine Authentifizierungsanforderung des ersten Servers.

3. Verfahren nach Anspruch 1 oder Anspruch 2, das ferner Folgendes umfasst:
Zuordnen (510) der Benutzerauswahl der Identität des zweiten Servers zum Client auf dem ersten Server.

4. Verfahren nach Anspruch 3, das ferner Folgendes umfasst:
Speichern (510) der Benutzerauswahl der Identität des zweiten Servers in einem persistenten Cookie beim Client.

5. Verfahren nach Anspruch 3, das ferner umfasst, dass einem Benutzer gestattet wird, auszuwählen (508, 610), ob die Benutzerauswahl der Identität des zweiten Servers in einem Cookie beim Client gespeichert werden soll.

6. Verfahren nach Anspruch 3, das ferner umfasst, dass einem Benutzer gestattet wird, auszuwählen (508, 610), ob die Benutzerauswahl der Identität des zweiten Servers dem Benutzer dauerhaft zugeordnet werden soll.

7. Verfahren nach Anspruch 1, das ferner Folgendes umfasst:
Umleiten der Authentifizierungsanforderung per HTTP an den zweiten Server über den Client (312) auf dem ersten Server.

8. Verfahren nach Anspruch 1, das eine Netzdatennachricht (302) verwendet, die Folgendes umfasst:
einen Transportprotokollheader;
eine einheitliche Referenz-ID (Uniform Resource Identifier, URI), die einer kontrollierten Ressource zugeordnet ist; und
ein Token eines Authentifizierungs-Serviceanbieters, das eine Domänenidentität eines Authentifizierungs-Serviceanbieters angibt, wobei der Authentifizierungs-Serviceanbieter einer aus einer Vielzahl von Authentifizierungs-Serviceanbietern in einer föderierten Umgebung ist, der zum Antworten auf eine Anforderung für den Zugriff auf die kontrollierte Ressource verwendet werden kann.

9. Computersystem, das Mittel umfasst, welche zum Ausführen der Schritte des Verfahrens nach einem der vorangehenden Ansprüche 1 bis 8 angepasst sind.

10. Computerprogramm, das auf einem vom Computer verwendbaren Medium gespeichert ist, wobei das Computerprogramm computerlesbare Programmmittel umfasst, mit denen ein Computer zum Ausführen eines Verfahrens nach einem der vorangehenden Ansprüche 1 bis 8 veranlasst wird, wenn das Programm auf dem Computer läuft.

## Revendications

1. Procédé d'authentification déterminée par l'utilisateur au sein d'un environnement fédéré (200) comprenant un utilisateur, qui est représenté par un client (202), une multitude de fournisseurs de services de commerce électronique (210, 212) et une multitude de fournisseurs de services d'authentification (214, 216), comprenant les étapes consistant à :
recevoir au niveau d'un premier serveur une demande (302) provenant d'un client d'accès à une ressource commandée par le premier serveur,
déterminer (304) si le premier serveur dispose d'un identifiant d'authentification valide pour le client au niveau du premier serveur,
A:
si le premier serveur dispose d'un identifiant d'authentification valide :
exécuter une décision de commande d'accès (322) pour la demande provenant du client d'accès (326) à la ressource commandée sur la base de l'identifiant d'authentification pour le client au niveau du premier serveur,
si le premier serveur ne dispose pas d'un identifiant d'authentification valide :
déterminer (306) si le premier serveur dispose d'une identité d'un second serveur pour prendre en charge un service d'authentification qui a été précédemment associé au client au niveau du premier serveur,
B :
si le premier serveur dispose d'une identité d'un second serveur :
envoyer une demande d'authentification (312) au second serveur depuis le premier serveur,
recevoir (314, 316) l'identifiant d'authentification pour le client depuis le second serveur, et
continuer à l'étape A,
si le premier serveur ne dispose d'aucune identité d'un second serveur :
présenter un menu de fournisseurs de services d'authentification (502) au client;
recevoir du client une sélection (504) d'une identité pour le second serveur, et
continuer à l'étape B.

2. Procédé selon la revendication 1 comprenant en outre :
la détermination au niveau du second serveur (404) du fait que le second serveur dispose d'un identifiant d'authentification valide pour le client, et
en réponse à une détermination de ce que le second serveur dispose d'un identifiant d'authentification valide pour le client, le renvoi d'un statut d'authentification valide (410) en réponse à une demande d'authentification du premier serveur.

3. Procédé selon la revendication 1 ou la revendication 2 comprenant en outre :
l'association (510) au client du choix par l'utilisateur de l'identité du second serveur au niveau du premier serveur.

4. Procédé selon la revendication 3 comprenant en outre :
la mémorisation (510) du choix par l'utilisateur de l'identité du second serveur dans un témoin persistant au niveau du client.

5. Procédé selon la revendication 3 comprenant en outre :
le fait de permettre à un utilisateur de choisir (508, 610) s'il mémorise le choix par l'utilisateur de l'identité du second serveur dans un témoin au niveau du client.

6. Procédé selon la revendication 3 comprenant en outre :
le fait de permettre à un utilisateur de choisir (508, 610) s'il associe de façon persistante le choix par l'utilisateur de l'identité du second serveur à l'utilisateur.

7. Procédé selon la revendication 1 comprenant en outre :
l'utilisation d'un réacheminement de protocole HTTP par l'intermédiaire du client (312) pour envoyer la demande d'authentification au second serveur au niveau du premier serveur.

8. Procédé selon la revendication 1 utilisant un message de données de réseau (302) comprenant :
un en-tête de protocole de transport,
un identificateur de ressource uniforme (URI) associé à une ressource commandée, et
un jeton de fournisseur de services d'authentification qui indique une identité de domaine d'un fournisseur de services d'authentification, où le fournisseur de services d'authentification est l'un d'une pluralité de fournisseurs de services d'authentification dans un environnement fédéré qui peut être utilisé pour répondre à une demande d'accès à la ressource commandée.

9. Système informatique comprenant un moyen conçu pour exécuter les étapes du procédé selon l'une quelconque des revendications 1 à 8 précédentes.

10. Produit de programme informatique mémorisé sur un support utilisable par un ordinateur, comprenant un moyen de programme lisible par un ordinateur destiné à amener un ordinateur à exécuter un procédé selon l'une quelconque des revendications 1 à 8 précédentes lorsque ledit programme est exécuté sur ledit ordinateur.
